(19) Europäisches Patentamt
European Patent Office
Office européen des brevets

(11) EP 0 416 566 B1

(12) **EUROPÄISCHE PATENTSCHRIFT**

(45) Veröffentlichungstag und Bekanntmachung des Hinweises auf die Patenterteilung:
**14.07.1999 Patentblatt 1999/28**

(51) Int Cl.⁶: **C08F 10/00**, C08F 4/602

(21) Anmeldenummer: **90117039.9**

(22) Anmeldetag: **05.09.1990**

(54) **Verfahren zur Herstellung eines Polyolefinwachses**

Process for preparing a polyolefine wax

Procédé de préparation d'une cire polyoléfinique

(84) Benannte Vertragsstaaten:
**BE DE ES FR GB IT NL**

(30) Priorität: **07.09.1989 DE 3929693**

(43) Veröffentlichungstag der Anmeldung:
**13.03.1991 Patentblatt 1991/11**

(73) Patentinhaber: **TARGOR GmbH**
**55116 Mainz (DE)**

(72) Erfinder:
- **Winter, Andreas, Dr.**
  **D-6233 Kelkheim/Taunus (DE)**
- **Rohrmann, Jürgen, Dr.**
  **D-6237 Liederbach (DE)**
- **Dolle, Volker, Dr.**
  **D-6233 Kelkheim/Taunus (DE)**
- **Antberg, Martin, Dr.**
  **D-6238 Hofheim am Taunus (DE)**
- **Spaleck, Walter, Dr.**
  **D-6237 Liederbach (DE)**

(56) Entgegenhaltungen:
**EP-A- 0 321 851**
**EP-A- 0 321 852**
**EP-A- 0 321 853**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 416 566 B1

Printed by Jouve, 75001 PARIS (FR)

## Beschreibung

Die Erfindung bezieht sich auf ein Verfahren zur Herstellung eines Polyolefinwachses, wobei die Polymerketten durch die Wahl der Polymerisationstemperatur in ihrer Taktizität verändert werden können, ohne daß die Viskositätszahl des Polymeren verändert wird.

Die Herstellung von isotaktischen Polyolefinwachsen (Isotakt. Index 80 bis 85 %, Schmelzenthalpie 63 J/g, Mischungen aus ataktischen und isotaktischen Polyolefinketten) mittels Trägerkatalysator, Cokatalysator und Stereoregulator bei Temperaturen von über 95°C ist bekannt (vgl. DE-A 31 48 229). Als Molmassenregler müssen große Mengen Wasserstoff eingesetzt werden.

Ferner ist auch ein $MgCl_2$-Trägerkontakt bekannt, der zu kristallinen PP-Wachsen mit enger Molmassenverteilung führt (vgl. JP 59/206 409). Auch dieser Katalysator weist die typischen Nachteile von Katalysatorsystemen auf, die für die Herstellung hochmolekularer Polyolefine entwickelt wurden und somit bei der Herstellung niedermolekularer Polyolefine eine geringe Aktivität besitzen. Ferner ist auch hier im Wachsprodukt eine unerwünschte Mischung aus isotaktischen und ataktischen Ketten vorhanden.

Weiterhin sind wachsartige statistische Ethylen-Copolymere mit einem 1-Olefinanteil von 1 bis 15 mol% bekannt, welche unter Verwendung eines Katalysatorsystems auf Basis Zirkonhydrid-Metallocen/Aluminoxan hergestellt werden (vgl. JP 62/129 303). Solche Metallocene eignen sich jedoch nicht zur Erzeugung von isotaktischem Polypropylen; außerdem ist ihre Aktivität bei der Propylen-Polymerisation sehr gering.

Bedingt durch die geringen Katalysatoraktivitäten unter den notwendigen Reaktionsbedingungen werden in den Polymerwachsen relativ hohe Chlorgehalte von teilweise über 1000 ppm gefunden, sofern die Katalysatorrückstände nicht durch eine aufwendige spezielle Nachbehandlung entfernt werden.

Es ist auch die Verwendung von Metallocen/Aluminoxan/Wasserstoff-Katalysatorsystemen für die Herstellung hochisotaktischer 1-Olefinpolymerwachse vorgeschlagen worden (vgl. DE 3 743 321 und die äquivalente EP-A-0 321 852); die Wachse haben gesättigte Kettenenden. Die Nachteile der vorstehend beschriebenen Verfahren konnten mit diesem Katalysator überwunden werden, die hohe Isotaktizität der Produkte führte jedoch zu einer extrem hohen Härte der Wachse, was für eine Reihe von Wachsanwendungen unerwünscht ist.

Begleiterscheinung der durch dieses Verfahren erzielten hohen Isotaktizität sind Schmelzpunkte, die für viele Wachsanwendungen zu hoch sind. Ferner wird für die Einstellung der Molmasse Wasserstoff verwendet, ein Verfahren, das auf den Einsatz eines Molmassenreglers verzichten könnte, würde zu einer deutlichen Verfahrensvereinfachung führen.

Eine prinzipielle Möglichkeit zur Reduzierung der Härte besteht in nachträglichem Zumischen von ataktischem Poly-1-Olefinwachs. Abgesehen von den großtechnisch nicht vertretbaren unwirtschaftlich hohen Kosten, führt dieses Zumischen zu uneinheitlichen und klebrigen Produkten.

Aus der Literatur ist bekannt, daß mit Metallocen/Aluminoxansystemen bei hoher Polymerisationstemperatur ein niedriger-molekulares Polymer gebildet wird, als bei tieferen Temperaturen (vgl. W. Kaminsky et al., Macromol. Chem., Macromol. Symp., 3 (1986) 377) gleichzeitig verändert sich dabei die Taktizität der Polymerketten nur geringfügig (vgl. W. Kaminsky et al., Angew. Chem. 97 (1985) 507).

Es bestand somit die Aufgabe, ein Verfahren zu finden, mit dem sich Polyolefinwachse mit unterschiedlicher Isotaktizität, jedoch vergleichbarer Molmasse und enger Molmassenverteilung herstellen lassen.

Es wurde gefunden, daß die Aufgabe gelöst werden kann, wenn ein speziell verbrücktes Metallocen verwendet wird.

Die Erfindung betrifft somit ein Verfahren zur Herstellung eines Polyolefinwachses durch Polymerisation oder Copolymerisation eines Olefins der Formel $R^9CH{=}CHR^{10}$, worin $R^9$ und $R^{10}$ gleich oder verschieden sind und ein Wasserstoffatom oder einen Alkylrest mit 1 bis 28 C-Atomen bedeuten, oder $R^9$ und $R^{10}$ mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Metallocen eine Verbindung der Formel I ist

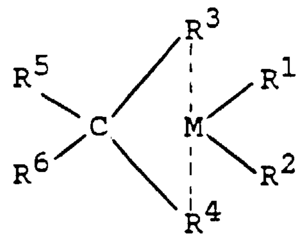

(I),

worin

M ein Metall der Gruppe IVb, Vb oder VIb des Periodensystems ist,
$R^1$ und $R^2$ gleich sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,
$R^3$ und $R^4$ gleich sind und einen ein- oder mehrkernigen Kohlenwasserstoffrest, welcher mit dem Übergangsmetall eine Sandwichstruktur bilden kann, bedeuten
und $R^5$ und $R^6$ gleich oder verschieden sind und ein Halogenatom, eine $C_1$-$C_{10}$-Alkylgruppe, eine $C_1$-$C_{10}$-Alkoxygruppe, eine $C_6$-$C_{10}$-Alkylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe, einen
$-SiR^7_3-$, $-NR^7_2-$, $-PR^7_2-$, $-P(O)R^7_2-$, $-Si(OR^7)R^7_2-$, $-Si(OR^7)_2R^7-$, $-Si(OR^7)_3-$, $-AsR^7_2-$ oder $-SR^7$-Rest bedeuten,
wobei $R^7$ die Bedeutung von $R^1$ hat.

Die Erfindung betrifft weiterhin das nach diesem Verfahren hergestellte Polyolefinwachs, eine Verbindung der Formel (I), sowie einem Katalysator aus einem Aluminoxan und Metallocen.

Der für das erfindungsgemäße Verfahren zu verwendende Katalysator besteht aus einem Aluminoxan und einem Metallocen der Formel I

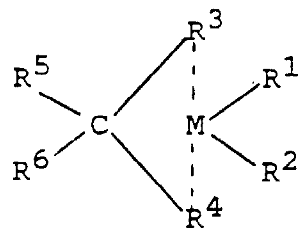

(I)

M ist ein Metall der Gruppe IVb, Vb oder VIb des Periodensystems, bevorzugt Ti, Zr oder Hf, besonders bevorzugt Zr.

$R^1$ und $R^2$ sind gleich und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind gleich und bedeuten einen ein- oder mehrkernigen Kohlenwasserstoffrest, welcher mit dem Übergangsmetall eine Sandwichstruktur bilden kann, wobei substituierte Cyclopentadienylreste bevorzugt sind. Besonders bevorzugt ist der Indenylrest.

$R^5$ und $R^6$ sind gleich oder verschieden und bedeuten ein Halogenatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe einen $SiR^7_3$-, $-NR^7_2$-, $-PR^7_2$-, $-P(O)\ R^7_2$- , $-Si(OR)R^7_2$-, $-Si(OR^7)_2R^7$-, $-Si(OR^7)_3$-,$-AsR^7_2$- oder $-SR^7$-Rest, wobei $R^7$ die für $R^1$ angeführte Bedeutung hat.

Bevorzugt sind Alkyl- und Arylgruppen. Bevorzugte Metallocenverbindungen sind $R^5R^6C$(Bisindenyl)$ZrCl_2$ und $R^5R^6C$(Bisindenyl)$Zr(CH_3)_2$.
Besonders bevorzugt sind $Ph_2C$(Bisindenyl)$ZrCl_2$ und $(CH_3)_2C$(Bisindenyl)$ZrCl_2$.

Die vorstehend beschriebenen Metallocene können nach folgendem allgemeinen Reaktionsschema hergestellt werden:

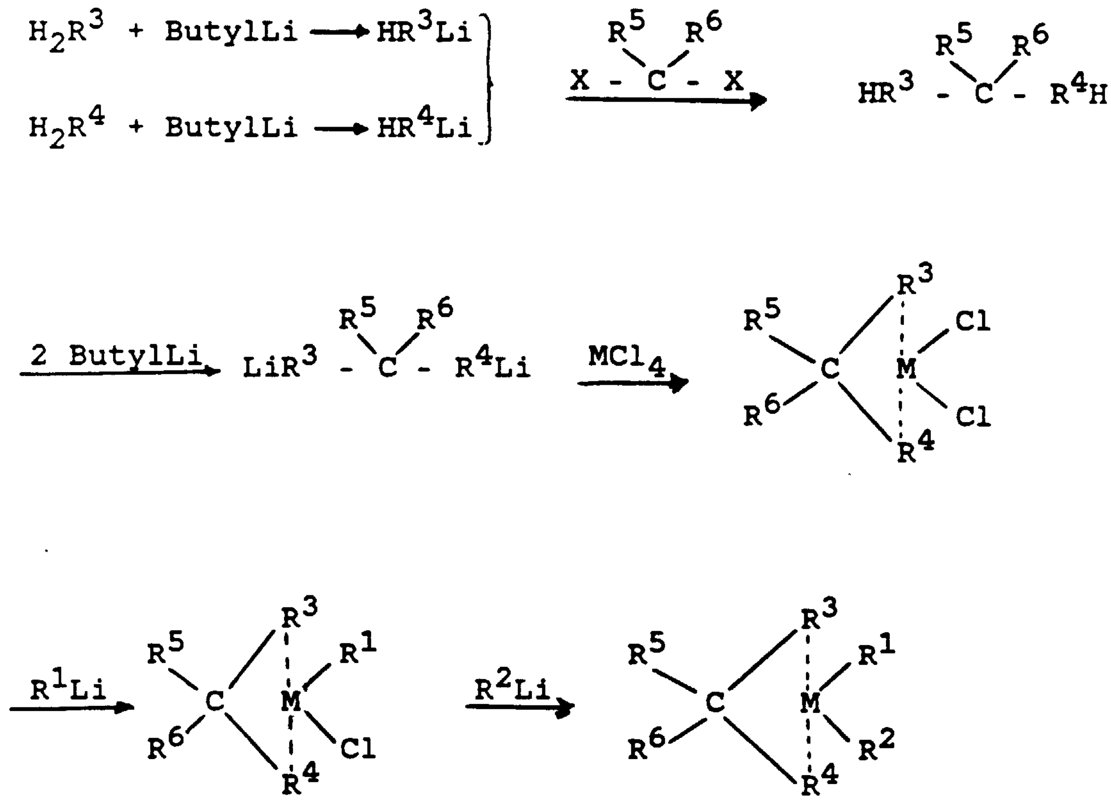


(X = Cl, Br, I, O-Tosyl)

oder:

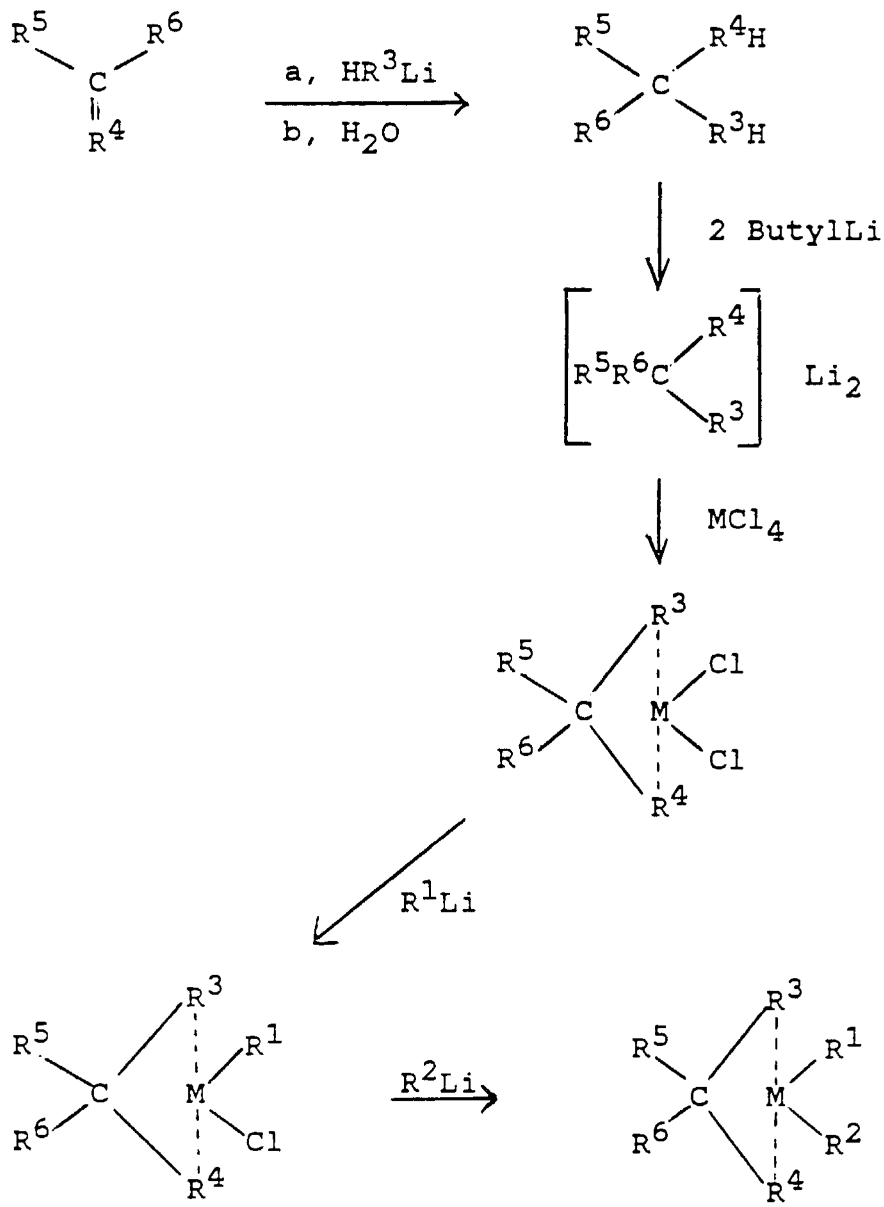


Der Cokatalysator ist in der Regel ein Aluminoxan der Formel II

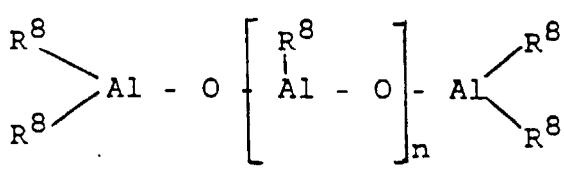 (II)

für den linearen Typ und/oder der Formel III

$$\left[\begin{array}{l} R^8 \\ | \\ Al - O \end{array}\right]_{n+2}- \qquad (III)$$

für den cyclischen Typ. In diesen Formeln bedeutet $R^8$ eine $C_1$-$C_6$-Alkylgruppe, vorzugsweise Methyl, Ethyl oder Isobutyl, Butyl oder Neopentyl, oder eine $C_6$-$C_{10}$-Arylgruppe, vorzugsweise Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls, vorzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20°C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationssystem vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel II und/oder III vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Die Polymerisation wird in bekannter Weise in Lösung, in Suspension oder in der Gasphase, kontinuierlich oder diskontinuierlich, ein- oder mehrstufig bei einer Temperatur von -60 bis 200°C, vorzugsweise -30 bis 100°C, insbesondere 0 bis 80°C, durchgeführt.

Der Gesamtdruck im Polymerisationssystem beträgt 0,5 bis 100 bar. Bevorzugt ist die Polymerisation in dem technisch besonders interessanten Druckbereich von 5 bis 60 bar. Monomere, deren Siedepunkt höher ist als die Polymerisationstemperatur, werden bevorzugt drucklos polymerisiert.

Dabei wird die Metallocenverbindung in einer Konzentration, bezogen auf das Übergangsmetall, von $10^{-3}$ bis $10^{-8}$ vorzugsweise $10^{-4}$ bis $10^{-7}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-5}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.

Polymerisiert oder copolymerisiert werden Olefine der Formel $R^9CH=CHR^{10}$, worin $R^9$ und $R^{10}$ gleich oder verschieden sind und ein Wasserstoffatom oder einen Alkylrest mit 1 bis 28 C-Atomen bedeuten, wobei $R^9$ und $R^{10}$ auch mit den sie verbindenden C-Atomen einen Ring bilden können. Beispiele für solche Olefine sind Ethylen, Propylen, 1-Buten, 1-Hexen, 4-Methyl-1-penten, 1-Octen, Norbornen oder Norbornadien. Bevorzugt ist Propylen.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß im technisch interessanten Temperaturbereich zwischen 30 und 80°C die Molmasse der hergestellten Polymeren sich praktisch nicht ändert, daß durch Temperaturvariation jedoch die Isotaktizität der Polymerketten zwischen etwa 98 und 50 % ($^{13}C$-NMR-Daten) variiert werden kann.

Dadurch läßt sich ohne eine Änderung der Viskositätszahl des Polymeren gezielt die Härte und der Schmelzpunkt einstellen und somit ein maßgeschneidertes Produkt erzeugen. Die hergestellten Polymerpulver zeichnen sich durch eine exzellente Pulvermorphologie - gute Rieselfähigkeit, hohe Schüttdichte - aus.

Weiterhin kann auf den Einsatz von Wasserstoff verzichtet werden, wodurch zusätzlich durch die Bildung ungesättigter Kettenenden (β-Eliminierungsmechanismus) die Möglichkeit einer Funktionalisierung der Polyolefinwachse besteht. Der Verzicht auf Wasserstoff bedeutet eine deutliche Verfahrensvereinfachung.

Die nachfolgenden Beispiele sollen die Erfindung erläutern. Es bedeuten:

| | |
|---|---|
| VZ = | Viskositätszahl in $cm^3/g$ |
| $M_w$ = | Molmassengewichtsmittel in g/mol |
| $M_n$ = | Molmassenzahlenmittel in g/mol |
| $M_w/M_n$ = | Molmassenverteilung |

Die Molmassen wurden durch Gelpermeationschromatographie bestimmt.
$^{13}C$-NMR-Spektroskopie:

| | |
|---|---|
| II = | Isotaktischer Index |
| $n_{iso}$ = | mittlere isotaktische Blocklänge $(1 + \frac{2\,mm}{mr})$ |
| SD = | Polymerschüttdichte in $g/dm^3$ |
| SV = | Schmelzviskosität, ermittelt mittels Rotationsviskosimeter bei 170°C |
| Schmp. = | Schmelzpunkt, bestimmt durch DSC-Messung (20°C/min Aufheiz-/Abkühlgeschwindigkeit); ebenso wurde die Schmelzwärme mittels DSC bestimmt. |

Die Handhabung von Metallocen und Aluminoxan erfolgte unter Schutzgas.

**Beispiel 1**

2,2-Bis(1-indenyl)propan

Eine Lösung von 5,93 g (47,0 mmol) über $Al_2O_3$ filtriertes Inden (techn., 91 %) wurde bei 0°C mit 18,8 $cm^3$ (47,0 mmol) n-Butyllithium versetzt. Nach 15 min Rühren bei Raumtemperatur wurde die Lösung langsam zu einer Lösung von 7,40 g (47,0 mmol) 1-Isopropylideninden getropft. Nach 2 h Rühren bei bei Raumtemperatur wurden 50 $cm^3$ Wasser zugesetzt und der Ansatz mit Diethylether extrahiert. Die gelbe organische Phase wurde über $MgSO_4$ getrocknet. Der nach dem Abziehen des Lösemittels verbleibende Rückstand wurde an Kieselgel 60 chromatographiert. Mit Hexan/Methylenchlorid (10:1) ließen sich 1,5 g (13 %) des Produktes isolieren (2 Isomere).

rac-Isopropyliden-bis-(1-indenyl)-zirkoniumdichlorid

Eine Lösung von 1,50 g (5,51 mmol) 2,2-Bis-(1-indenyl)propan in 15 $cm^3$ Diethylether wurde unter Wasserkühlung mit 5,30 $cm^3$ (13,0 mmol) n-Butyllithium (2,5 M/Hexan) versetzt. Nach 2 h Rühren bei Raumtemperatur wurden 10 $cm^3$ Hexan zugegeben. Der farblose Niederschlag wurde über eine Glasfritte abfiltriert, mit Hexan gewaschen und im Ölpumpenvakuum getrocknet. Man erhielt 1,96 g des Dilithiosalzes, das noch ca. 20 Gew.-% Diethylether enthielt (quantitative Ausbeute). Dieses wurde bei -78°C zu einer Suspension von 1,28 g (5,51 mmol) $ZrCl_4$ in 25 $cm^3$ Methylenchlorid gegeben. Die Reaktionsmischung wurde in ca. 6 h langsam auf Raumtemperatur erwärmt. Der orange Niederschlag wurde über eine Glasfritte filtriert, mit wenig Methylenchlorid gewaschen und im Ölpumpenvakuum getrocknet. Man erhielt 930 mg (39 %) des Komplexes rac-($(CH_3)_2C$(1-indenyl)$_2$)$ZrCl_2$ als orangefarbenes Kristallpulver. Korrektes Massenspektrum ($M^+$ = 432).
$^1$H-NMR-Spektrum ($CDCl_3$):
6,92-7,80 (m, 8, arom. H), 6,70 (dd, 2, β-IndH), 6,15 (d, 2, α-IndH), 2,37 (s, 6, $CH_3$).

**Beispiel 2**

Ein trockener 16 $dm^3$-Reaktor wurde mit Stickstoff gespült und mit 10 $dm^3$ flüssigem Propylen befüllt. Dann wurden 30 $cm^3$ toluolische Methylaluminoxanlösung (entsprechend 40 mmol Al, mittlerer Oligomerisierungsgrad des Methylaluminoxan n = 20) zugegeben und der Ansatz bei 30°C 15 Minuten gerührt. Parallel dazu wurden 105 mg (0,243 mmol) rac-Isopropyliden-bis-(1-indenyl)-Zirkondichlorid in 15 $cm^3$ toluolischer Methylaluminoxanlösung (20 mmol Al) gelöst und durch 15 minütiges Stehenlassen voraktiviert. Die violette Lösung wurde dann in den Kessel gegeben. Die Polymerisation wurde 5 h bei 30°C durchgeführt.
Es wurden 3,10 kg Polypropylenwachs, entsprechend einer Metallocenaktivität von 5,9 kg PP/g Metallocen x h, erhalten.
VZ = 14,0 $cm^3$/g; $M_w$ = 15900, $M_n$ = 6500, $M_w/M_n$ = 2,4;
II = 95,6 %, $n_{iso}$ = 36; SD = 360 g/$dm^3$;
SV = 470 m Pa·s; Schmp. = 142°C, Schmelzwärme = 105 J/g; Kugeldruckhärte = 1400 bar, Fließhärte = > 1000 bar.

**Beispiel 3**

Es wurde verfahren wie in Beispiel 1, verwendet wurden jedoch 78,3 mg (0,181 mmol) des Metallocens, die Polymerisationstemperatur betrug 40°C und die Polymerisationszeit 3 h.
Es wurden 2,32 kg Polypropylenwachs, entsprechend einer Metallocenaktivität von 9,9 kg PP/g Metallocen x h, erhalten.
VZ = 14,7 $cm^3$/g; $M_w$ = 16 500, $M_n$ = 5800, $M_w/M_n$ = 2,8;
II = 90,2 %, $n_{iso}$ = 21; SD = 382 g/$dm^3$;
SV = 490 m Pa·s; Schmp. = 132°C, Schmelzwärme = 80 J/g; Kugeldruckhärte = 1170 bar, Fließhärte = > 1000.

**Beispiel 4**

Es wurde verfahren wie in Beispiel 1, verwendet wurden jedoch 28,9 mg (0,067 mmol) des Metallocens, die Polymerisationstemperatur betrug 60°C und die Polymerisationszeit 2 h.
Es wurden 2,38 kg Polypropylenwachs, entsprechend einer Metallocenaktivität von 41,2 kg PP/g Metallocen x h, erhalten.
VZ = 13,5 $cm^3$/g; $M_w$ = 14 150, $M_n$ = 5300, $M_w/M_n$ = 2,6;
II = 85,8 %, $n_{iso}$ = 14; SD = 415 g/$dm^3$;
SV = 390 mPa·s; Schmp. = 125°C, Schmelzwärme = 72 J/g; Kugeldruckhärte = 762 bar, Fließhärte = 1000 bar.

**Beispiel 5**

Es wurde verfahren wie in Beispiel 1, verwendet wurden jedoch 37,3 mg (0,086 mmol) des Metallocens, die Polymerisationstemperatur betrug 70°C und die Polymerisationszeit 1 h.
Es wurden 2,36 kg Polypropylenwachs, entsprechend einer Metallocenaktivität von 63,3 kg PP/g Metallocen x h, erhalten.
VZ = 13,6 $cm^3$/g; $M_w$ = 14 750, $M_n$ = 5050, $M_w/M_n$ = 2,9;
II = 79,7 %, $n_{iso}$ = 11,5; SD = 362 g/$dm^3$;
SV = 450 m Pa·s; Schmp. = 124°C, Schmelzwärme = 65 J/g; Kugeldruckhärte = 254 bar, Fließhärte = 780 bar.

**Beispiel 6**

Es wurde verfahren wie in Beispiel 1, verwendet wurden jedoch 15,0 mg (0,035 mmol) des Metallocens, die Polymerisationstemperatur betrug 78°C und die Polymerisationszeit 1 h.
Es wurden 1,58 kg Polypropylenwachs, entsprechend einer Metallocenaktivität von 105,3 kg PP/g Metallocen x h, erhalten.
VZ = 13,5 $cm^3$/g; $M_w$ = 14 200, $M_n$ = 5600, $M_w/M_n$ = 2,5;
II = 70,5 %, $n_{iso}$ = 9; SD = 380 g/$dm^3$; Schmp. = 120°C, Schmelzwärme = 59 J/g.

## Patentansprüche

**1.** Verfahren zur Herstellung eines Polyolefinwachses durch Polymerisation oder Copolymerisation eines Olefins der Formel $R^9CH=CHR^{10}$, worin $R^9$ urd $R^{10}$ gleich oder verschieden sind und ein Wasserstoffatom oder einen Alkylrest mit 1 bis 28 C-Atomen bedeuten, oder $R^9$ und $R^{10}$ mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Metallocen eine Verbindung der Formel I ist

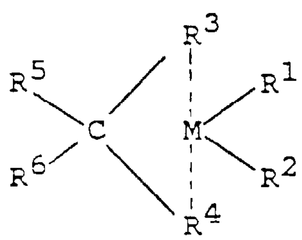

(I),

worin

M ein Metall der Gruppe IVb, Vb oder VIb des Periodensystems ist,

$R^1$ und $R^2$ gleich sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{10}$-Arylalkylgruppe, eine $C_7$-$C_{40}$-Alkylarylgruppe, eine $C_8$-$C_{10}$-Arylalkenylgruppe oder ein Halogenatom bedeuten,

$R^3$ und $R^4$ gleich sind und einen ein- oder mehrkernigen Kohlenwasserstoffrest, welcher mit dem Ubergangsmetall eine Sandwichstruktur bilden kann, bedeuten und

$R^5$ und $R^6$ gleich oder verschieden sind und, ein Halogenatom, eine $C_1$-$C_{10}$-Alkoxygruppe, eine $C_1$-$C_{10}$-Alkoxygruppe, eine $C_6$-$C_{10}$-Aryloxygruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe, einen -$SiR^7_3$-, -$NR^7_2$-, -$PR^7_2$-, -$P(O)R^7_2$-, -$Si(OR^7)R^7_2$-, -$S-(OR^7)_2R^7$-, -$Si(OR^7)_3$-, -$AsR^7_2$- oder -$SR^7$-Rest bedeuten,

wobei $R^7$ die Bedeutung von $R^1$ hat.

**2.** Verfahren nach Anspruch 1, dadurch gekennzeichnet, daß Propylen polymerisiert wird.

**3.** Verfahren gemäß Anspruch 1, dadurch gekennzeichnet, daß das Metallocen rac-Isopropyliden-bis-(1-indenyl)-zirkoniumdichlorid ist.

**4.** Polyolefinwachs, herstellbar gemäß einem oder mehreren der Ansprüche 1 bis 3.

**5.** Verbindung der Formel I

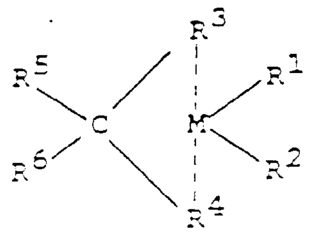

(I),

worin

M ein Metall der Gruppe IVb, Vb oder VIb des Periodensystems ist,

$R^1$ und $R^2$ gleich sind und ein Wasserstoffatom, eine $C_1$-$C_{10}$-Akylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$ und $R^4$ gleich sind und einen ein- oder mehrkernigen Kohlenwasserstoffrest, welcher mit dem Übergangsmetall eine Sandwichstruktur bilden kann, bedeuten und

$R^5$ und $R^6$ gleich oder verschieden sind und ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe, einen $-SiR^7_3-$, $-NR^7_2-$ $-PR^7_2-$ $-P(O)R^7_2-$, $-Si(OR^7)R^7_2-$, $-Si(OR^7)_2R^7-$, $-Si(-OR^7)_3-$, $-AsR^7_2-$ oder $-SR^7$-Rest bedeuten,

wobei $R^7$ die Bedeutung von $R^1$ hat.

**6.** rac-Isopropyliden-bis-(1-indenyl)-zirkoniumdichlorid.

**7.** Katalysator, bestehend aus einem Aluminoxan und einem Metallocen gemäß Anspruch 5 oder 6.

**Claims**

**1.** A process for the preparation of a polyolefin wax by polymerization or copolymerization of an olefin of the formula $R^9CH=CHR^{10}$, in which $R^9$ and $R^{10}$ are identical or different and are a hydrogen atom or an alkyl radical having 1 to 28 carbon atoms, or $R^9$ and $R^{10}$, together with the atoms joining them, can form a ring, at a temperature of -60 to 200°C under a pressure of 0.5 to 100 bar, in solution, in suspension or in the gas phase, in the presence of a catalyst which consists of a metallocene and an aluminoxane, wherein the metallocene is a compound of the formula I

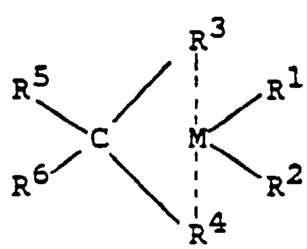

(I),

in which

M is a metal of group IVb, Vb or VIb of the periodic table,

$R^1$ and $R^2$ are identical and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom,

$R^3$ and $R^4$ are identical and are a mono- or polynuclear hydrocarbon radical which can form a sandwich structure with the transition metal, and

$R^5$ and $R^6$ are identical or different and are a halogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a $-SiR^7_3$, $-NR^7_2$, $-PR^7_2$, $-P(O)R^7_2$, $-Si(OR^7)R^7_2$, $-Si(OR^7)_2R^7$, $-Si(OR^7)_3$, $-AsR^7_2$ or $-SR^7$ radical,

in which $R^7$ has the meaning of $R^1$.

**2.** The process as claimed in claim 1, wherein propylene is polymerized.

**3.** The process as claimed in claim 1, wherein the metallocene is racemic isopropylidene-bis-(1-indenyl)-zirconium dichloride.

**4.** A polyolefin wax which can be prepared as claimed in one or more of claims 1 to 3.

**5.** A compound of the formula I

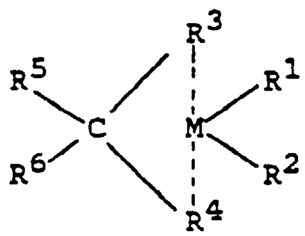

(I),

in which

M is a metal of group IVb, Vb or VIb of the periodic table,

$R^1$ and $R^2$ are identical and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom,

$R^3$ and $R^4$ are identical and are a mono- or polynuclear hydrocarbon radical which can form a sandwich structure with the transition metal, and

$R^5$ and $R^6$ are identical or different and are a halogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a $-SiR^7_3$, $-NR^7_2$, $-PR^7_2$, $-P(O)R^7_2$, $-Si(OR^7)R^7_2$, $-Si(OR^7)_2R^7$, $-Si(OR^7)_3$, $-AsR^7_2$ or $-SR^7$ radical,

in which $R^7$ has the meaning of $R^1$.

**6.** Racemic isopropylidene-bis-(1-indenyl)-zirconium dichloride.

**7.** A catalyst consisting of an aluminoxane and a metallocene as claimed in claim 5 or 6.

**Revendications**

**1.** Procédé de préparation d'une cire polyoléfinique par polymérisation ou copolymérisation d'une oléfine répondant à la formule $R^9CH{=}CHR^{10}$, dans laquelle $R^9$ et $R^{10}$ sont identiques ou différents et représentent un atome d'hydrogène ou un radical alkyle comportant 1 à 28 atomes de C, ou $R^9$ et $R^{10}$ peuvent former un noyau avec les atomes qui les relient, à une température de -60 à 200°C, à une pression de 0,5 à 100 bars, en solution, en

suspension ou dans la phase gazeuse, en présence d'un catalyseur qui est constitué d'un métallocène et d'un aluminoxane :

caractérisé en ce que le métallocène est un composé de la formule I :

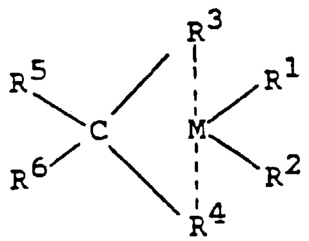

(I)

dans laquelle

M est un métal du groupe IVb, Vb ou VIb du système périodique,

$R^1$ et $R^2$ sont identiques et représentent un atome d'hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$ ou un atome d'halogène,

$R^3$ et $R^4$ sont identiques et représentent un radical d'hydrocarbure à un ou plusieurs noyaux, qui peut former une structure sandwich avec le métal de transition, et

$R^5$ et $R^6$ sont identiques ou différents et représentent un atome d'halogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$, un radical $-SiR^7_3-$, $-NR^7_2-$, $-PR^7_2-$, $-P(O)R^7_2-$, $-Si(OR^7)R^7_2-$, $-Si(OR^7)_2R^7-$, $-Si(OR^7)_3-$, $-AsR^7_2-$ ou $-SR^7-$, où $R^7$ a la signification de $R^1$.

2. Procédé suivant la revendication 1, caractérisé en ce que du propylène est polymérisé.

3. Procédé suivant la revendication 1, caractérisé en ce que le métallocène est du dichlorure d'isopropylidène-bis-(1-indényl)-zirconium racémique.

4. Cire polyoléfinique, préparable selon une ou plusieurs des revendications 1 à 3.

5. Composé de la formule I :

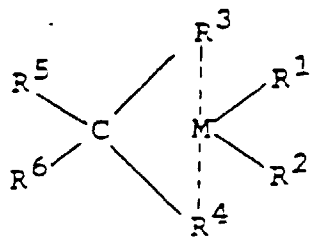

(I)

dans laquelle

M est un métal du groupe IVb, Vb ou VIb du système périodique,

$R^1$ et $R^2$ sont identiques et représentent un atome d'hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$ ou un atome d'halogène,

$R^3$ et $R^4$ sont identiques et représentent un radical d'hydrocarbure à un ou plusieurs noyaux, qui peut former une structure sandwich avec le métal de transition, et

$R^5$ et $R^6$ sont identiques ou différents et représentent un atome d'halogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en

$C_2$-$C_{10}$, un groupe arylalkyle en $C_7$-$C_{40}$, un groupe alkylaryle en $C_7$-$C_{40}$, un groupe arylalcényle en $C_8$-$C_{40}$, un radical $-SiR^7_3-$, $NR^7_2-$, $-PR^7_2-$, $-P(O)R^7_2-$, $-Si(OR^7)R^7_2-$ $-Si(OR^7)_2R^7-$, $-Si(OR^7)_3-$, $-AsR^7_2-$ ou $-SR^7-$, où $R^7$ a la signification de $R^1$.

**6.** Dichlorure d'isopropylidène-bis-(1-indényl)-zirconium racémique.

**7.** Catalyseur, constitué d'un aluminoxane et d'un métallocène suivant l'une des revendications 5 et 6.